# FASCICULE DE BREVET EUROPEEN

(11) **EP 1 930 207 B1**
(45) Date de publication et mention de la délivrance du brevet: **02.03.2011**
(21) Numéro de dépôt: 07301624.8
(22) Date de dépôt: 04.12.2007
(51) Int. Cl.: B60N 2/30

(54) **Siège escamotable et un véhicule automobile comprenant un tel siège**
Versenkbarer Sitz und Kraftfahrzeug, das einen solchen Sitz umfasst
Retractable seat and automobile comprising such a seat

(30) Priorité: 06.12.2006 FR 0655349
(43) Date de publication de la demande: 11.06.2008
(73) Titulaire: PEUGEOT CITROËN AUTOMOBILES SA, 78140 Vélizy Villacoublay (FR)
(72) Inventeur: Dutot, Christophe, 75012 Paris (FR); Gomes, Antonio, 78560 Le Port Marly (FR)

(56) Documents cités:
- US-A- 5 662 377
- US-A1- 2005 093 355

## Description

L'invention concerne principalement un siège escamotable et un véhicule automobile équipé d'un tel siège.

Les sièges escamotables sont utilisés pour augmenter l'efficacité de rangement dans les véhicules.

Par exemple, la publication FR 2705289, décrit un siège escamotable comprenant un dossier pourvu d'une armature mobile destinée à recevoir un coussin de dossier, ainsi qu'une assise pourvue d'une armature mobile destinée à recevoir un coussin d'assise.

Le dossier est monté pivotant relativement à l'assise en occupant plusieurs positions, en particulier, une position d'utilisation dite normale dans laquelle le dossier est sensiblement perpendiculaire à l'assise, et une position escamotée dans laquelle le dossier est rabattu sur l'assise en ayant pivoté vers l'avant du véhicule de manière à être sensiblement parallèle au plancher du véhicule.

Cependant, ce type de sièges escamotables occupe un volume relativement important dans l'habitacle du véhicule lorsqu'il est dans sa position escamotée.

De plus, le siège décrit dans cette publication implique, pour son escamotage, l'utilisation de moyens dont le montage et la mise en oeuvre sont relativement complexes.

Le document WO2004/043207 décrit un siège conforme au préambule de la revendication 1.

L'invention a pour but de pallier ces inconvénients.

A cet effet, l'invention a pour objet un siège escamotable destiné à équiper un véhicule automobile, le siège comprend un dossier mobile pourvu d'une armature de dossier et d'un support de garnissage porté par l'armature, et une assise mobile reliée au dossier, le essentiellement caractérisé en ce qu'il comprend des moyens d'entraînement du support de garnissage depuis une position d'utilisation dans laquelle le support de garnissage est distant d'au moins une partie de l'armature de dossier jusqu'à une position repliée dans laquelle ce support de garnissage est proche de cette armature.

Un tel assemblage entre le support et l'armature de dossier permet de concevoir un dossier qui présente une épaisseur suffisante pour un confort optimum pour un usager lorsque le dossier est en position normale d'utilisation grâce à l'espace entre l'armature de dossier et le support de garnissage, et une faible épaisseur lorsqu'il est dans sa position repliée de façon que le dossier de siège soit, dans cette position repliée, parallèle au plancher tout en employant des moyens simples pour son escamotage.

Selon une autre caractéristique de l'invention, le siège escamotable comprend également des moyens de guidage de l'assise depuis une position initiale d'utilisation distante du plancher du véhicule jusqu'à une position de rangement proche du plancher du véhicule.

Avantageusement, les moyens de guidage de l'assise comprennent une bielle avant articulée à l'assise et à un élément de carrosserie fixe, tel qu'un support pied du siège.

Par exemple, la bielle avant peut être montée pivotante par rapport à l'assise, autour d'un premier axe de pivotement transversal, et est montée pivotante relativement au support pied autour d'un deuxième axe de pivotement transversal.

En outre, le siège peut comporter des moyens de guidage du dossier depuis une position initiale dans l'alignement de l'armature de dossier à une position finale sensiblement parallèle au plancher.

Préférentiellement, les moyens de guidage du dossier comprennent une bielle arrière articulée au dossier et à un élément de carrosserie fixe tel qu'un brancard extérieur.

Par exemple, la bielle arrière peut être montée pivotante à l'armature de dossier, autour d'un premier axe de pivotement transversal et est montée pivotante relativement à l'élément de carrosserie fixe autour d'un deuxième axe de pivotement transversal.

De manière préférentielle, les moyens d'entraînement du support de garnissage comprennent au moins un élément de liaison entre l'assise et le support de garnissage et des moyens d'entraînement de l'élément de liaison vers l'armature de dossier lors de l'escamotage du siège.

Avantageusement, les moyens d'entraînement de l'élément de liaison comprend une bielle formant crosse qui est rigidement solidaire de l'armature de dossier et montée pivotante relativement à l'élément de liaison entre l'assise et le support de garnissage autour d'un axe de pivotement transversal formant axe de pivotement entre le dossier et l'assise.

Par exemple, l'élément de liaison peut être solidaire rigidement de l'assise et pivote relativement au support de garnissage autour d'un axe de pivotement et en ce que le support de garnissage comporte une lumière dans laquelle peut coulisser l'élément de liaison.

Egalement, le support de garnissage peut être monté pivotant par rapport à l'armature de dossier, autour d'un axe de pivotement transversal.

En outre, le siège peut comprendre des moyens de verrouillage du siège dans sa position normale d'utilisation comportant au moins un crochet monté pivotant entre une position de verrouillage et une position de déverrouillage autour d'un axe transversal de pivotement et en ce que les moyens de verrouillage comprennent deux crochets situés de part et d'autre de l'assise et reliés ensemble par un tube de liaison arrière apte à assurer un pivotement synchronisé de ces deux crochets.

De manière préférentielle, chaque crochet comprend une lumière dans laquelle coulisse un axe de butée du crochet et ladite lumière présente un profil sensiblement en V, l'une des branches du V correspondant à la position déverrouillée du crochet et l'autre branche à la position verrouillée.

De façon avantageuse, le siège comprend des moyens de stabilisation du dossier dans sa position repliée, ces moyens comprenant une grande bielle qui est montée pivotante relativement à l'armature de dossier autour d'un axe de pivotement transversal et qui est montée pivotante relativement au brancard extérieur autour d'un axe de pivotement transversal, de façon que la grande bielle passe d'une position initiale dans laquelle la grande bielle est montée sur le brancard du côté du rebord externe de ce brancard, à une position finale dans laquelle la grande bielle est en appui contre le rebord externe, le rebord externe formant arrêt à la grande bielle dans sa position finale.

Enfin, l'invention concerne également un véhicule automobile comprenant au moins un siège escamotable tel que défini ci-dessus.

D'autres caractéristiques et avantages de la présente invention ressortiront de la description ci-après d'un mode de réalisation, cette description étant faite en référence aux dessins annexés donnés uniquement à titre d'exemple et sur lesquels:
- la figure 1 est une vue schématique en perspective du siège selon l'invention représenté sans la grande bielle ;
- la figure 2 est une vue de côté de la partie basse du siège liée au brancard ;
- la figure 3 est une vue schématique de côté du siège de l'invention représenté dans sa position normale d'utilisation ;
- la figure 4 est une vue similaire à la figure 3 dans laquelle le siège est représenté dans une première position intermédiaire escamotée ;
- la figure 5 est une vue similaire à la figure 3 dans laquelle le siège est représenté dans une deuxième position intermédiaire escamotée ;
- la figure 6 est une vue similaire à la figure 3 dans laquelle le siège est représenté dans sa position finale escamotée.

Dans la description qui suit, les orientations avant, arrière, haut, bas, gauche, droite et latérale correspondent aux axes de référence traditionnels d'un véhicule, en particulier aux orientations habituelles du véhicule en sens normal de conduite.

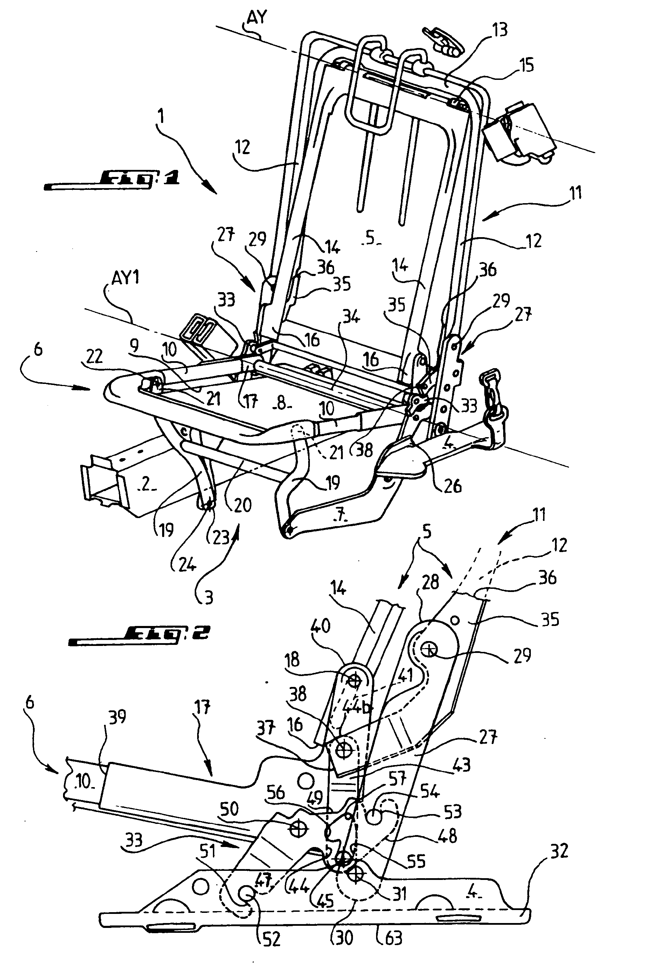

Par ailleurs, en référence à la figure 1 sur laquelle est représenté un siège escamotable 1 destiné à équiper un véhicule automobile, il est à noter que ce siège 1 est symétrique par rapport à un plan médian parallèle à un plan passant par la direction longitudinale du véhicule XX', de ce fait, seul un côté du siège est représenté sur les figures 2 à 6 et décrit en référence à ces figures, à savoir le côté latéral gauche du siège 1. Cependant, la symétrie n'est pas forcément nécessaire, certains éléments constitutifs de l'invention peuvent n'être situés que d'un seul côté, comme il sera précisé plus loin.

Sur la figure 1 sont également représentés des éléments de carrosserie du véhicule, tels qu'un tunnel interne 2, un plancher de carrosserie 3 et un brancard extérieur 4.

Le siège escamotable 1 comporte notamment un dossier mobile 5, une assise mobile 6 et un support pied de siège 7 qui est destiné à solidariser le siège 1 au plancher 3 d'une manière connue et qui est monté solidaire par son extrémité arrière 26 au brancard extérieur 4.

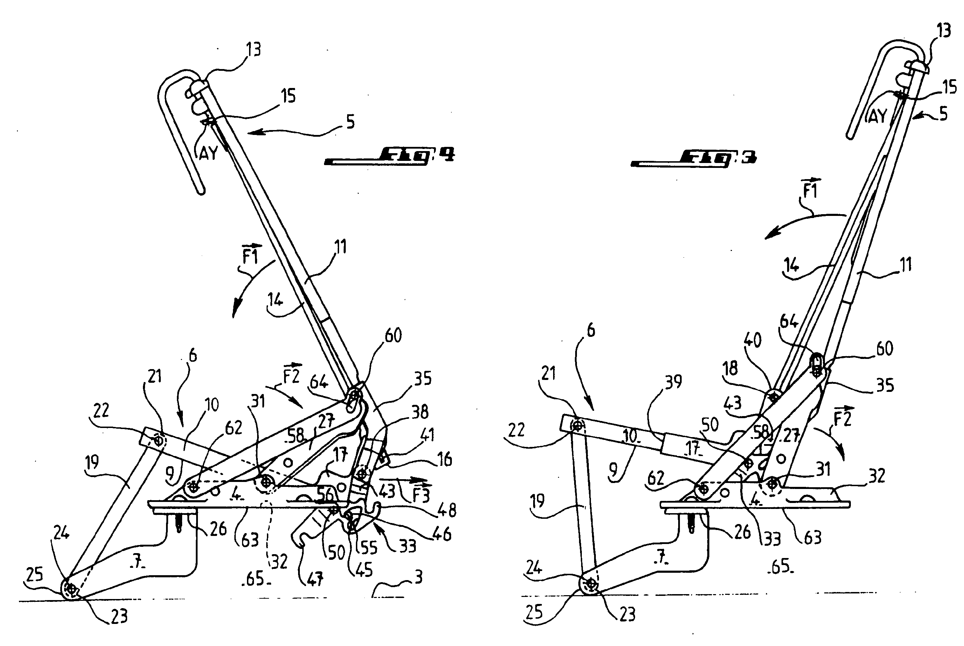

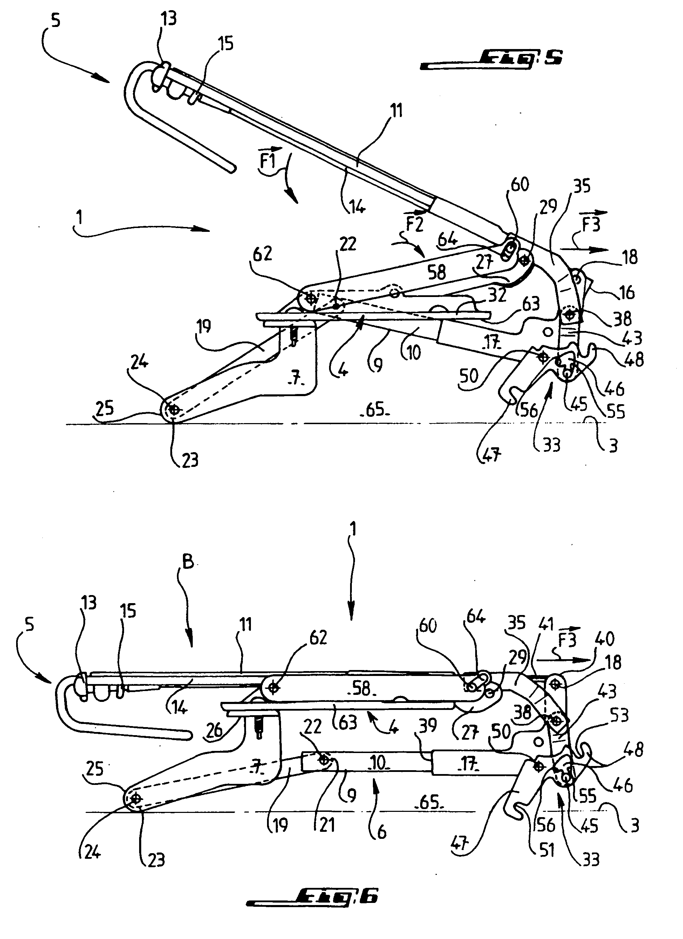

Le siège 1 comporte également des moyens de liaison entre le dossier 5 et l'assise 6 et des moyens d'escamotage du siège, selon l'invention, entre une position normale d'utilisation A, représentée sur la figure 3, et une position escamotée B, représentée sur la figure 6, ces moyens seront détaillés plus loin.

Selon la figure 1, l'assise mobile 6 est constituée d'une paroi 8 sensiblement rectangulaire qui a notamment une face inférieure 9 en vis-à-vis du plancher 3 et qui est délimitée par des bords latéraux 10 et des bords transversaux non référencés.

Le dossier mobile 5 comprend une armature de dossier mobile 11 réalisée en un matériau rigide et comportant deux montants latéraux verticaux 12 reliés ensemble par une traverse 13 située à l'extrémité de l'armature 11 la plus éloignée de l'assise 6.

Selon l'invention, ce dossier 5 comprend également un support de garnissage mobile 14 qui est réalisé en un matériau souple, de préférence, et est apte à recevoir le dos d'un occupant du siège 1 en position d'utilisation A.

Le support de garnissage 14 et l'armature de dossier 11 sont reliés entre eux, au niveau de la traverse 13, par l'intermédiaire d'une tige transversale 15 située proche de la traverse 13.

Le support de garnissage 14 est sensiblement proche de l'armature de dossier 11 au niveau de cette tige 15, et s'étend jusqu'à son extrémité inférieure 16 en s'évasant dans la direction du plancher 3 du véhicule.

Par ailleurs, le support de garnissage 14 de l'invention est apte à pivoter par rapport à l'armature de dossier 11, depuis la position d'utilisation A de la figure 1, autour d'un axe de rotation transversal AY confondu avec la tige transversale 15.

Egalement selon l'invention, le support de garnissage 14 est relié à l'assise 6 par l'intermédiaire de deux éléments de liaison 17, et est apte à pivoter relativement à cette assise 6, depuis la position d'utilisation de la figure 1, autour d'un axe de pivotement 18 représenté notamment sur la figure 2 et situé au niveau de son extrémité inférieure 16.

Chaque bord latéral 10 de l'assise 6 est relié à une bielle avant 19 qui est constituée d'un tube curviligne, les deux bielles avant 19 étant reliées ensemble par une tige de renfort transversale 20.

L'extrémité supérieure 21 de chaque bielle avant 19 est montée pivotante relativement à l'assise 6 autour d'un axe de pivotement transversal 22 situé sur les bords latéraux 10 de l'assise 6.

L'extrémité inférieure 23 de chaque bielle avant 19 est montée pivotante relativement au support pied 7 autour d'un axe de pivotement transversal 24 situé sur l'extrémité avant 25 du support pied 7.

Egalement en référence à la figure 1, chaque montant latéral 12 de l'armature de dossier 11 est relié à une bielle arrière 27, une des bielles arrière étant située du côté du brancard extérieur 4.

L'extrémité supérieure 28 de la bielle arrière côté brancard 27 est montée pivotante par rapport à l'armature de dossier 11 autour d'un axe de pivotement transversal 29 situé sur cette armature 11, comme visible sur la figure 1.

L'extrémité inférieure 30 de cette bielle arrière 27 est montée pivotante par rapport au brancard extérieur 4, autour d'un axe de pivotement transversal 31 représenté notamment sur la figure 2 et situé sur le rebord interne 32 de ce brancard 4.

Sur la figure 1, sont montrés deux crochets de verrouillage 33 du siège 1 dans sa position d'utilisation A, ces deux crochets 33 étant identiques et situés de part et d'autre de l'assise 6.

Les deux crochets de verrouillage 33 sont montés fous sur l'élément de liaison 17 entre l'assise 6 et le support de garnissage 14 correspondant entre une position de verrouillage du siège 1 et une position de déverrouillage du siège 1, comme détaillé plus loin.

Ces crochets 33 sont reliés ensemble par un tube de liaison arrière 34, qui est monté pivotant relativement à l'assise 6 autour d'un axe de pivotement transversal AY1 confondu avec le tube 34, ledit tube 34 étant apte à assurer un pivotement synchronisé des deux crochets 33.

Deux bielles formant crosse 35 sont également prévues sur le siège escamotable 1 et relient l'armature de dossier 11 à l'assise 6 par l'intermédiaire des deux éléments de liaison 17 entre l'assise 6 et le support de garnissage 14.

L'extrémité supérieure 36 de chaque bielle formant crosse 35 est solidaire des montants latéraux 12 de l'armature de dossier 11.

L'extrémité inférieure 37 de cette bielle 35 est montée pivotante relativement à l'élément de liaison 17 correspondant, autour d'un axe de pivotement transversal 38 situé sur l'élément de liaison 17 et formant axe de pivotement du dossier 5 relativement à l'assise 6.

En référence à la figure 2, l'élément de liaison 17 entre le support de garnissage 14 et l'assise 6 présente une forme en L renversé.

Une des extrémités du L 39 est rigidement solidaire des bords latéraux 10 de l'assise 6, l'autre extrémité 40 est reliée à l'extrémité inférieure 16 du support de garnissage 14 et porte l'axe de pivotement 18 du support de garnissage 14 relativement à l'assise 6.

Cet axe de pivotement 18 est monté coulissant dans une lumière 41 située sur l'extrémité inférieure 16 du support de garnissage 14, permettant à ce support de garnissage 14 d'être monté également glissant par rapport à l'assise 6.

Comme visible sur la figure 2, la bielle formant crosse 35 est solidaire du montant latéral 12 de l'armature de dossier 11 correspondant, et est montée pivotante par rapport à l'élément de liaison 17 entre l'assise 6 et le support de garnissage 14, autour de l'axe transversal 38. Ainsi, par l'intermédiaire de la bielle formant crosse 35, l'armature de dossier 11 est reliée à l'assise 6.

A l'extrémité supérieure 36 de la bielle formant crosse 35 est reliée de manière pivotante à l'extrémité supérieure 28 de la bielle arrière 27 autour de l'axe transversal 29, l'extrémité inférieure 30 de cette bielle arrière 27 étant montée pivotante relativement au brancard 4 autour de l'axe 31, comme décrit précédemment.

Au niveau de l'extrémité inférieure 37 de la bielle formant crosse 35 est reliée de façon pivotante une biellette 43, par son extrémité supérieure 44 b, autour d'un axe de pivotement transversal confondu avec l'axe de pivotement 38 du dossier 5 relativement à l'assise 6.

L'extrémité inférieure 44 de la biellette 43 est libre et porte un axe de butée 45 du crochet 33, qui est apte à se déplacer dans une lumière 46 en forme de V prévue sur le crochet 33.

Selon l'exemple illustré sur la figure 2, le crochet 33 est constitué d'un premier tronçon 47 et d'un second tronçon 48 reliés ensemble par une partie centrale 49.

La partie centrale 49 de chaque crochet 33 est reliée à l'élément de liaison 17 entre l'assise 6 et le support de garnissage 14 correspondant.

Chaque crochet 33 est monté fou en pivotement relativement à l'élément de liaison 17 autour d'un axe de pivotement transversal 50, situé au niveau de la partie centrale 49 sur l'élément de liaison 17, entre une position verrouillée correspondante à la position d'utilisation du siège 1, comme visible sur la figure 2, et une position déverrouillée autorisant le siège 1 à s'escamoter.

Le premier tronçon 47 comprend une extrémité recourbée 51 en forme de U définissant un logement d'accueil à une butée de verrouillage du crochet 52 dans sa position verrouillée, ladite butée 52 étant située sur le brancard extérieur 4.

Le second tronçon 48 comprend également une extrémité recourbée 53 en forme de U définissant un logement d'accueil à une butée de verrouillage du crochet 54 dans sa position verrouillée, ladite butée 54 étant située sur la bielle arrière 27.

Le second tronçon 48 comprend également la lumière 46 dans laquelle l'axe de butée 45 se déplace entre une position de déverrouillage du crochet 33 lorsque le siège 1 est escamoté et une position de verrouillage du crochet 33 lorsque le siège 1 est revenu à sa position normale d'utilisation A.

Cette lumière 46 est sensiblement en forme de V renversé comprenant deux extrémités 55 et 56 opposées par la base du V 57. L'extrémité 55 forme logement accueillant l'axe de butée 45 lorsque le crochet 33 est en position verrouillée. L'extrémité 56 forme également logement d'accueil de cet axe de butée 45 de manière à maintenir le crochet 33 en position déverrouillée lorsque le siège 1 s'escamote.

Comme visible sur les figures 3 à 6, le siège escamotable 1 comprend également une grande bielle 58 reliant l'armature de dossier 11 au brancard extérieur 4.

L'extrémité supérieure 59 de la grande bielle 58 est montée pivotante relativement à l'armature de dossier 11 autour d'un axe de pivotement transversal 60 situé sur l'armature de dossier 11.

L'extrémité inférieure 61 de cette grande bielle 58 est montée pivotante par rapport au brancard 4, du côté du rebord externe 63 de ce brancard 4, autour d'un axe transversal de pivotement 62, le rebord externe 63 formant surface d'arrêt à la grande bielle 58.

Il est à noter que l'extrémité supérieure 59 de la grande bielle 58 comprend une lumière 64 dans laquelle le premier axe de pivotement 60 de cette grande bielle 58 par rapport à l'armature de dossier 11 est apte à se déplacer en effectuant un aller-retour, depuis et vers sa position initiale visible sur la figure 3, de manière à ne pas entraver le repliement du dossier 5 vers l'avant du véhicule.

Dans l'exemple des figures 4 à 6, les éléments constitutifs du siège de l'invention sont empilés dans des plans verticaux successifs et sensiblement parallèles à la direction longitudinale du véhicule, depuis le premier plan des figures jusqu'au plan le plus éloigné de ce premier plan, comme suit.

La grande bielle 58 apparaît en premier, suivie du brancard extérieur 4, qui est disposé dans un plan situé entre le plan de la grande bielle 58 et le plan de la bielle arrière 27.

Ensuite, le crochet 33 et la bielle formant crosse 35 sont situés tous les deux dans un même plan vertical situé derrière le plan de la bielle arrière 27.

Enfin, la biellette 43 se trouve dans un plan situé derrière ledit plan du crochet 33 et de la bielle formant crosse 35, suivie directement par l'élément de liaison 17 entre l'assise 6 et le support de garnissage 14.

En référence aux figures 3 à 6, le déplacement des différents éléments constitutifs du siège de l'invention est comme suit.

L'armature de dossier 11 est montée pivotante par rapport à l'assise 6 autour de l'axe transversal 38, depuis la position d'utilisation de la figure 3 jusqu'à la position repliée de la figure 6 dans laquelle l'armature de dossier 11 est en vis-à-vis du plancher 3 du véhicule.

Le support de garnissage 14 est monté pivotant relativement à l'armature de dossier 11, autour de l'axe transversal AY, depuis la position d'utilisation de la figure 3, dans laquelle le support de garnissage 14 est distant de l'armature de dossier 11 au niveau de son extrémité inférieure 16 jusqu'à une position rangée de la figure 6, dans laquelle l'extrémité inférieure 16 du support de garnissage 14 est très proche de l'armature de dossier 11.

Le support de garnissage 14 est monté pivotant relativement à l'assise 6 autour de l'axe transversal 18, depuis sa position d'utilisation jusqu'à une position repliée correspondante à la position repliée de l'armature de dossier 11.

L'assise 6 est montée déplaçable, grâce aux bielles arrière 27, depuis sa position initiale de réception de l'usager (figure 3), jusqu'à une position de rangement dans laquelle elle a simultanément baissé et reculé par rapport à sa position initiale de sorte que sa surface inférieure 9 devient très proche du plancher 3 du véhicule.

La bielle avant 19 est montée pivotante respectivement par rapport à l'assise 6 et au support pied 7 de manière à passer d'une position initiale dans laquelle la bielle avant 19 est relativement proche de la verticale (figure 3) à une position finale dans laquelle elle est rapprochée du plancher 3 du véhicule (figure 6).

La bielle arrière 27 est montée pivotante respectivement par rapport à l'armature de dossier 11 et au brancard 4 de manière à passer d'une position initiale dans laquelle la bielle arrière 27 est dans l'alignement de l'armature de dossier (figure 3) à une position finale dans laquelle cette bielle est sensiblement parallèle au plancher 3 du véhicule (figure 6).

La grande bielle 58 est montée pivotante respectivement par rapport à l'armature de dossier 11 et au brancard 4 de manière à passer d'une position initiale dans laquelle cette grande bielle 58 est relativement inclinée vers l'arrière par rapport à la verticale (figure 3), jusqu'à une position finale dans laquelle cette grande bielle 58 vient en appui contre le rebord externe 63 du brancard 4 en formant ainsi un moyen de stabilisation du dossier 5 dans sa position repliée (figure 6).

Le crochet 33 est montée fou en pivotement sur l'élément de liaison 17 entre l'assise 6 et le support de garnissage 14, autour de l'axe de pivotement transversal 50, entre sa position verrouillée (figures 2, 5 et 6) et sa position déverrouillé (figure 4).

Le fonctionnement du siège escamotable décrit précédemment est présenté ci après en référence aux figures 3 à 6.

Initialement, le siège 1 occupe sa position normale d'utilisation A, les crochets 33 occupent leur position de verrouillage du siège 1 dans sa position d'utilisation.

Les crochets 33 de verrouillage sont déverrouillés manuellement, par exemple, par un actionnement manuel d'une poignée fixée directement sur l'un des crochets 33, poignée non représentée.

Pour maintenir les crochets 33 dans leur position déverrouillée de la figure 4, l'axe de butée du crochet 45 coulisse depuis la première extrémité 55 de la lumière en V 46 jusqu'à ce qu'il arrive à la base du V 57 pour ensuite continuer son déplacement jusqu'à la deuxième extrémité 56 de la lumière en V 46.

Dans cette configuration, la biellette 43 est sensiblement inclinée en arrière. L'arc-boutement de la biellette 43 fait que l'axe de butée 45 est maintenu au niveau de la deuxième extrémité 56 de la lumière 46.

Une poussée manuelle est exercée sur la face arrière du dossier 5 vers l'avant du véhicule pour amorcer l'escamotage en faisant basculer l'armature de dossier 11 vers l'assise dans le sens antihoraire illustré par la flèche F1 sur les figures 3 à 6.

Le pivotement de l'armature de dossier 11 autour de l'axe 38 entraîne également le pivotement du support de garnissage 14 vers l'assise 6 autour de l'axe 18, qui à son tour entraîne le déplacement de l'élément de liaison 17, et par conséquent l'assise 6, simultanément vers le plancher 3 et vers l'arrière du véhicule.

Ce déplacement de l'assise 6 fait que le support de garnissage 14 se rapproche de l'armature de dossier 11 pour être sensiblement collé à celle-ci. Il en résulte que l'épaisseur du dossier 5 ainsi replié devient moins importante que l'épaisseur de ce dossier 5 en utilisation normale.

De plus, le déplacement de l'élément de liaison 17 simultanément vers l'arrière et vers le plancher 3 entraîne le pivotement de la bielle formant crosse 35 et de la biellette 43 autour de l'axe de pivotement 38 vers l'avant du véhicule.

Dès que la biellette 43 devient sensiblement perpendiculaire (figures 2 et 5) ou inclinée en avant (figure 6), l'axe de butée 45 coulisse automatiquement depuis la deuxième extrémité 56 de la lumière 46 vers la première extrémité 55 de sorte que le crochet 33 se retrouve dans sa position verrouillée.

Egalement de façon simultanée, les bielles avant 19, sont entraînées, par le déplacement de l'assise 6, à pivoter autour de leurs axes de pivotement 22 et 24 respectivement, en accompagnant le mouvement de l'assise 6 vers le plancher 3 et l'arrière du véhicule jusqu'à ce que l'assise 6 repose entièrement dans un espace sous siège 65.

Aussi, le pivotement du dossier 5 vers l'avant du véhicule entraîne le pivotement de chacune des bielles arrière 27 autour de leurs axes 29 et 31 respectivement et le pivotement de la grande bielle 58 autour de ses axes 60 et 62 respectivement, vers l'arrière du véhicule dans le sens horaire illustré par une flèche F2 sur les figures 3 à 6.

Le rangement de l'assise 6 à l'intérieur de l'espace sous siège 65 s'effectue au fur et à mesure que le dossier 5 est replié vers l'avant.

Du fait du déplacement de l'assise 6 vers le plancher 3 et vers l'arrière du véhicule, le dossier 5 dans sa position repliée est décalé vers l'arrière du véhicule selon la flèche F3 illustrée sur les figures 3 à 6.

Lorsque le siège est totalement escamoté 1, la grande bielle 58 vient en butée contre le rebord externe 63 du brancard extérieur 4 de manière à empêcher le dossier 5 de continuer son pivotement vers le plancher 3 afin d'obtenir un dossier 5 plat et parallèle au plancher 3 du véhicule pour poser des objets sur le dessus du dossier 5.

L'avantage du siège escamotable 1 tel que décrit précédemment réside dans le fait qu'il utilise des moyens d'entraînement du support de garnissage 14 et des moyens de déplacement de l'assise 6 qui sont simples et peu coûteux.

L'escamotage du siège s'effectue en un seul mouvement grâce aux déplacements de tous les éléments le constituant de manière simultanée.

Dans sa position de rangement, l'assise 6 du siège 1 est logée entièrement dans l'espace sous siège 65, le dossier 5 dans la position repliée est plat de manière à fournir un plancher supplémentaire dans le véhicule.

Ce siège 1 ainsi escamoté occupe un volume très réduit permettant d'avoir un volume de chargement du véhicule plus optimisé.

## Revendications

1. Siège escamotable (1) destiné à équiper un véhicule automobile, le siège (1) comprend un dossier mobile (5) pourvu d'une armature de dossier (11) et d'un support de garnissage (14) porté par l'armature (11), une assise mobile (6) reliée au dossier (5), le dossier (5) est monté pivotant relativement à l'assise (6) depuis une position normale dite d'utilisation (A) jusqu'à une position repliée sur l'assise (6) lorsque le siège (1) est dans sa position escamotée (B), et des moyens d'entraînement du support de garnissage (14) depuis une position d'utilisation dans laquelle le support de garnissage (14) est distant d'au moins une partie de l'armature de dossier (11) jusqu'à une position repliée dans laquelle ce support de garnissage (14) est proche de cette armature (11) **caractérisé en ce que** le support de garnissage (14) est monté pivotant par rapport à l'armature de dossier (11), autour d'un axe de pivotement transversal (15, AY).

2. Siège escamotable (1) selon la revendication 1, **caractérisé en ce qu'**il comprend également des moyens de guidage (19) de l'assise (6) depuis une position initiale d'utilisation distante du plancher (3) du véhicule jusqu'à une position de rangement proche du plancher (3) du véhicule.

3. Siège escamotable (1) selon la revendication 2, **caractérisé en ce que** les moyens de guidage de l'assise (6) comprennent une bielle avant (19) articulée à l'assise (6) et à un élément de carrosserie fixe, tel qu'un support pied (7) du siège (1).

4. Siège escamotable (1) selon la revendication 3, **caractérisé en ce que** la bielle avant (19) est montée pivotante par rapport à l'assise (6), autour d'un premier axe de pivotement transversal (22), et est montée pivotante relativement au support pied (7) autour d'un deuxième axe de pivotement transversal (24).

5. Siège escamotable (1) selon l'une des revendications 1 à 4, **caractérisé en ce qu'**il comporte des moyens de guidage (27) du dossier (5) depuis une position initiale dans l'alignement de l'armature de dossier à une position finale sensiblement parallèle au plancher (3).

6. Siège escamotable (1) selon la revendication 5, **caractérisé en ce que** les moyens de guidage du dossier (5) comprennent une bielle arrière (27) articulée au dossier (5) et à un élément de carrosserie fixe tel qu'un brancard extérieur (4).

7. Siège escamotable (1) selon la revendication 6, **caractérisé en ce que** la bielle arrière (27) est montée pivotante à l'armature de dossier (11), autour d'un premier axe de pivotement transversal (29) et est montée pivotante relativement à l'élément de carrosserie fixe (4) autour d'un deuxième axe de pivotement transversal (30).

8. Siège escamotable (1) selon l'une des revendications 1 ou 7, **caractérisé en ce que** les moyens d'entraînement du support de garnissage (14) comprennent au moins un élément de liaison (17) entre l'assise (6) et le support de garnissage (14) et des moyens d'entraînement (35) de l'élément de liaison (17) vers l'armature de dossier (11) lors de l'escamotage du siège (1).

9. Siège escamotable (1) selon la revendication 8, **caractérisé en ce** les moyens d'entraînement de l'élément de liaison (17) comprend une bielle formant crosse (35) qui est rigidement solidaire de l'armature de dossier (11) et montée pivotante relativement à l'élément de liaison (17) entre l'assise (6) et le support de garnissage (14) autour d'un axe de pivotement transversal (38) formant axe de pivotement entre le dossier (5) et l'assise (6).

10. Siège escamotable (1) selon la revendication 8 ou 9, **caractérisé en ce que** l'élément de liaison (17) est solidaire rigidement de l'assise (6) et pivote relativement au support de garnissage (14) autour d'un axe de pivotement (18) et **en ce que** le support de garnissage (14) comporte une lumière (41) dans laquelle peut coulisser l'élément de liaison (17).

11. Siège escamotable (1) selon l'une des revendications précédentes, **caractérisé en ce qu'**il comprend des moyens de verrouillage du siège (1) dans sa position normale d'utilisation (A) comportant au moins un crochet (33) monté pivotant entre une position de verrouillage et une position de déverrouillage autour d'un axe transversal de pivotement (50) et **en ce que** les moyens de verrouillage comprennent deux crochets (33) situés de part et d'autre de l'assise (6) et reliés ensemble par un tube de liaison arrière (34) apte à assurer un pivotement synchronisé de ces deux crochets (33).

12. Siège escamotable selon la revendication 11, **caractérisé en ce que** chaque crochet (33) comprend une lumière (46) dans laquelle coulisse un axe de butée (45) du crochet (33) et **en ce que** la lumière présente un profil sensiblement en V, l'une des branches (56) du V correspondant à la position déverrouillée du crochet (33) et l'autre branche (55) à la position verrouillée.

13. Siège selon l'une des revendications précédentes, **caractérisé en ce qu'**il comprend des moyens de stabilisation du dossier (5) dans sa position repliée, ces moyens comprenant une grande bielle (58) qui est montée pivotante relativement à l'armature de dossier (5) autour d'un axe de pivotement transversal (60) et qui est montée pivotante relativement au brancard extérieur (4) autour d'un axe de pivotement transversal (62), de façon que la grande bielle (58) passe d'une position initiale dans laquelle la grande bielle (58) est montée sur le brancard (4) du côté du rebord externe (63) de ce brancard (4), à une position finale dans laquelle la grande bielle (58) est en appui contre le rebord externe (63), le rebord externe (63) formant arrêt à la grande bielle (58) dans sa position finale.

14. Véhicule automobile comprenant au moins un siège escamotable (1) selon l'une quelconque des revendications 1 à 13.

## Claims

1. A retractable seat (1) for equipping a motor vehicle, the seat (1) comprises a movable backrest (5) provided with a backrest framework (11) and a trim carrier (14) carried by the framework (11), a movable sitting portion (6) connected to the backrest (5), the backrest (5) is pivotally mounted relative to the sitting portion (6) from a so-called normal operating position (A) to a position folded against the sitting portion (6) when the seat (1) is in its retracted position (B), and means (14) for driving the trim carrier (14) from an operating position in which the trim carrier (14) is remote from at least one portion of the backrest framework (11) to a folded position in which this trim carrier (14) is close to this framework (11) **characterised in that** the trim carrier (14) is pivotally mounted relative to the backrest framework (11), about a transverse pivot axis (15, AY).

2. The retractable seat (1) according to claim 1, **characterised in that** it also includes means (19) for guiding the sitting portion (6) from an initial operating position remote from the floor (3) of the vehicle to a stored position close to the floor (3) of the vehicle.

3. The retractable seat (1) according to claim 2, **characterised in that** the sitting portion (6) guiding means include a front connecting rod (19) hinged to the sitting portion (6) and to a fixed body element, such as a leg carrier (7) of the seat (1).

4. The retractable seat (1) according to claim 3, **characterised in that** the front connecting rod (19) is pivotally mounted relative to the sitting portion (6), about a first transverse pivot axis (22), and is pivotally mounted relative to the leg carrier (7) about a second transverse pivot axis (24).

5. The retractable seat (1) according to any of claims 1 to 4, **characterised in that** it includes means (27) for guiding the backrest (5) from an initial position in line with the backrest framework to a final position substantially parallel to the floor (3).

6. The retractable seat (1) according to claim 5, **characterised in that** the backrest (5) guiding means include a rear connecting rod (27) hinged to the backrest (5) and to a fixed body element such as an outside side-sill (4).

7. The retractable seat (1) according to claim 6, **characterised in that** the rear connecting rod (27) is pivotally mounted on the backrest framework (11), about a first transverse pivot axis (29) and is pivotally mounted relative to the fixed body element (4) about a second transverse pivot axis (30).

8. The retractable seat (1) according to either claim 1 or claim 7, **characterised in that** the trim carrier (14) driving means include at least one linking element (17) between the sitting portion (6) and the trim carrier (14) and means (35) for driving the linking element (17) towards the backrest framework (11) when retracting the seat (1).

9. The retractable seat (1) according to claim 8, **characterised in that** the linking element (17) driving means include a crook-type connecting rod (35) which is rigidly integral with the backrest framework (11) and pivotally mounted relative to the linking element (17) between the sitting portion (6) and the trim carrier (14) about a transverse pivot axis (38) providing a pivot axis between the backrest (5) and the sitting portion (6).

10. The retractable seat (1) according to either claim 8 or claim 9, **characterised in that** the linking element (17) is rigidly integral with the sitting portion (6) and pivots relative to the trim carrier (14) about a pivot axis (18) and **in that** the trim carrier (14) has a port (41) into which the linking element (17) can slide.

11. The retractable seat (1) according to any of preceding claims, **characterised in that** it includes means for locking the seat (1) in its normal operating position (A) having at least one hook (33) pivotally mounted between a locking position and an unlocking position about a transverse pivot axis (50) and **in that** the locking means include two fixed hooks (33) located on either side of the sitting portion (6) and connected together by a rear linking tube (34) capable of providing a synchronised pivoting of these two hooks (33).

12. The retractable seat (1) according to claim 11, **characterised in that** each hook (33) includes a port (46) into which an abutting axis (45) of the hook (33) slides and that the port has a substantially V shape profile, one of the branches (56) of the V corresponding to the unlocked position of the hook (33) and the other branch (55) to the locked position.

13. The seat according to any of the preceding claims, **characterised in that** it includes means (5) for stabilising the backrest in its folded position, these means including a large connecting rod (58) which is pivotally mounted relative to the backrest (5) framework about a transverse pivot axis (60) and which is pivotally mounted relative to the outside side-sill (4) about a transverse pivot axis (62), so that the large connecting rod (58) switches from an initial position in which the large connecting rod (58) is mounted on the side-sill (4) on the side of the outer rim (63) of this side-sill (4), to a final position in which the large connecting rod (58) bears against the outer rim (63), the outer rim (63) providing an abutment for the large connecting rod (58) in its final position.

14. A motor vehicle including at least one retractable seat (1) according to any of claims 1 to 13.

## Patentansprüche

1. Klappsitz (1), vorgesehen für die Ausstattung eines Kraftfahrzeugs, wobei der Sitz (1) eine bewegliche Rückenlehne (5), die mit einem Rückenlehnenrahmen (11) und einer von dem Rahmen (11) getragenen Polsterauflage (14) versehen ist, eine bewegliche Sitzfläche (6), die mit der Rückenlehne verbunden ist, wobei die Rückenlehne (5) relativ zu der Sitzfläche (6) aus einer normalen Position, genannt Nutzposition (A), in eine auf die Sitzfläche (6) umgeklappte Position drehbar gelagert ist, wenn sich der Sitz (1) in seiner geklappten Position befindet (B), und Mittel zur Mitnahme der Polsterauflage (14) aus einer Nutzposition, in der die Polsterauflage (14) von zumindest einem Teil des Rückenlehnenrahmens (11) beabstandet ist, in eine umgeklappte Position, in der sich diese Polsterauflage (14) nahe an diesem Rahmen befindet, umfasst, **dadurch gekennzeichnet, dass** die Polsterauflage (14) relativ zu dem Rückenlehnenrahmen (11) um eine Querdrehachse (15, AY) drehbar gelagert ist.

2. Klappsitz (1) nach Anspruch 1, **dadurch gekennzeichnet, dass** er auch Mittel zur Führung (19) der Sitzfläche (6) aus einer anfänglichen Nutzposition, vom Boden (3) des Fahrzeugs beabstandet, in eine Aufbewahrungsposition, nahe an dem Boden (3) des Fahrzeugs, umfasst.

3. Klappsitz (1) nach Anspruch 2, **dadurch gekennzeichnet, dass** die Mittel zur Führung der Sitzfläche (6) eine vordere Gelenkstange (19) umfassen, die an der Sitzfläche (6) und an einem festen Karosserieelement, wie z.B. einem Stützfuß (7) des Sitzes (1), angelenkt ist.

4. Klappsitz (1) nach Anspruch 3, **dadurch gekennzeichnet, dass** die vordere Gelenkstange (19) relativ zu der Sitzfläche (6) um eine erste Querdrehachse (22) drehbar gelagert ist und relativ zu dem Stützfuß (7) um eine zweite Querdrehachse (24) drehbar gelagert ist.

5. Klappsitz (1) nach einem der Ansprüche 1 bis 4, **dadurch gekennzeichnet, dass** er Mittel zur Führung (27) der Rückenlehne (5) aus einer anfänglichen Position in Flucht mit dem Rückenlehnenrahmen in eine Endposition, die im Wesentlichen parallel zum Boden (3) ist, umfasst.

6. Klappsitz (1) nach Anspruch 5, **dadurch gekennzeichnet, dass** die Mittel zur Führung der Rückenlehne (5) eine hintere Gelenkstange (27) umfassen, die an der Rückenlehne (5) und an einem festen Karosserieelement, z.B. einem Außenlängsträger (4), angelenkt ist.

7. Klappsitz (1) nach Anspruch 6, **dadurch gekennzeichnet, dass** die hintere Gelenkstange (27) auf dem Rückenlehnenrahmen (11) um eine erste Querdrehachse (29) drehbar gelagert ist und relativ zu dem festen Karosserieelement (4) um eine zweite Querdrehachse (30) drehbar gelagert ist.

8. Klappsitz (1) nach einem der Ansprüche 1 oder 7, **dadurch gekennzeichnet, dass** die Mittel zur Mitnahme der Polsterauflage (14) zumindest ein Element zur Verbindung (17) zwischen der Sitzfläche (6) und der Polsterauflage (14) und Mittel zur Mitnahme (35) des Verbindungselements (17) in Richtung des Rückenlehnenrahmens (11) beim Klappen des Sitzes (1) umfassen.

9. Klappsitz (1) nach Anspruch 8, **dadurch gekennzeichnet, dass** die Mittel zur Mitnahme des Verbindungselements (17) eine Gelenkstange umfassen, die eine Querstrebe (35) bildet, die starr mit dem Rückenlehnenrahmen verbunden ist und relativ zu dem Element zur Verbindung (17) zwischen der Sitzfläche (6) und der Polsterauflage (14) um eine Querdrehachse (38) drehbar gelagert ist, die eine Drehachse zwischen der Rückenlehne (5) und der Sitzfläche (6) bildet.

10. Klappsitz (1) nach Anspruch 8 oder 9, **dadurch gekennzeichnet, dass** das Verbindungselement (17) starr mit der Sitzfläche (6) verbunden ist und sich relativ zu der Polsterauflage (14) um eine Drehachse (18) dreht, und dadurch, dass die Polsterauflage (14) eine Öffnung (41) umfasst, in der das Verbindungselement (17) gleiten kann.

11. Klappsitz (1) nach einem der vorhergehenden Ansprüche, **dadurch gekennzeichnet, dass** er Mittel zur Verriegelung des Sitzes (1) in seiner normalen Nutzposition (A) umfasst mit zumindest einem Haken (33), der zwischen einer Verriegelungsposition und einer Entriegelungsposition um eine Querdrehachse (50) drehbar gelagert ist, und dadurch, dass die Verriegelungsmittel zwei Haken (33) umfassen, die auf beiden Seiten der Sitzfläche (6) angeordnet sind und durch ein hinteres Verbindungsrohr (34) miteinander verbunden sind, das dazu geeignet ist, eine synchronisierte Drehung dieser zwei Haken (33) sicherzustellen.

12. Klappsitz nach Anspruch 11, **dadurch gekennzeichnet, dass** jeder Haken (33) eine Öffnung (46) umfasst, in der eine Anschlagachse (45) des Hakens (33) gleitet, und dadurch, dass die Öffnung ein im Wesentlichen V-förmiges Profil aufweist, wobei einer der Schenkel (56) des V der entriegelten Position des Hakens (33) und der andere Schenkel (55) der verriegelten Position entspricht.

13. Sitz nach einem der vorhergehenden Ansprüche, **dadurch gekennzeichnet, dass** er Mittel zur Stabilisierung des Rückenlehne (5) in ihrer umgeklappten Position umfasst, wobei diese Mittel eine große Gelenkstange (58) umfassen, die relativ zu dem Rückenlehnenrahmen (5) um eine Querdrehachse (60) drehbar gelagert ist und die relativ zu dem Außenlängsträger (4) um eine Querdrehachse (62) drehbar gelagert ist, so dass die große Gelenkstange (58) aus einer anfänglichen Position, in der die große Gelenkstange (58) auf dem Außenlängsträger (4) auf der Seite des äußeren Rands (63) dieses Außenlängsträgers (4) gelagert ist, in eine Endposition übergeht, in der sich die große Gelenkstange (58) gegen den äußeren Rand (63) abstützt, wobei der äußere Rand (63) einen Anschlag für die große Gelenkstange (58) in ihrer Endposition bildet.

14. Kraftfahrzeug, umfassend mindestens einen Klappsitz (1) nach einem der Ansprüche 1 bis 13.
